# EUROPEAN PATENT APPLICATION

(11) **EP 1 843 521 A1**
(43) Date of publication of application: **10.10.2007**
(21) Application number: 06112183.6
(22) Date of filing: 03.04.2006
(51) Int. Cl.: H04L 12/26, H04L 12/24

(54) **Performance analysis apparatus and method for communication network**

(71) Applicant: Agilent Technologies, Inc., Santa Clara, CA 95051 (US)
(72) Inventor: Bond, David, South Queensferry, Lothian EH30 9TG (GB)
(74) Representative: Coker, David Graeme

(57) **Abstract**

A performance analysis apparatus (136) comprises a multi-dimensional database (138) that stores network performance data (302), geographic data (306) and criteria. The apparatus (136) also comprises a user interface (308) that generates a three-dimensional view of a geographic environment that surrounds a geographic location (402) to be investigated. The view of the geographic environment is manipulatable in order to locate the geographic location of interest, for example using a zoom function. Once the geographic location of interest (402) is identified in greater detail, a locality of the geographic location of interest (402) is displayed overlaid with a grid showing network performance on a per grid area basis corresponding to the network performance data (302) stored in the database (138). Drop down menu items (408) corresponding to criteria (410 ... 428) that can be used to control filtering of the network performance data are also displayed and are selectable in order to isolate one or more criterion associated with poor network performance at or around the geographic location (402).

## Description

The present invention relates to a performance analysis apparatus of the type that, for example, provides a visual representation of performance of a communications network. The present invention also relates to a method of analysing performance of the type that, for example, provides a visual representation of performance of a communications network.

### Background Art

In the field of network diagnostics, it is typical to represent an operational or historic state of a communications network by identifying points of poor performance in the communications network in relation to respective topological points in the communications network. Another known technique is to represent historic measurement data, for example transmitter signal strength levels in a communications network, overlaying a two-dimensional geographic map. Locations of geographic areas where poor measurement levels are attained can therefore be identified.

However, poor performance at a given geographic location in the communications network can be attributed to one or more of a number of causes. In this respect, the above known techniques for identification of poor performance in the communications network do not necessarily identify poor performance, a geographic location of the poor performance and/or provide a mechanism for deducing one or more factor associated with the poor performance.

### Disclosure of Invention

According to a first aspect of the present invention, there is provided a performance analysis apparatus for a communications network, the apparatus comprising: a database arranged to store, when in use, network performance data and geographic data, the network performance data being associated with the geographic data; and a user interface arranged to represent graphically, when in use, the network performance data together with the geographic data so that the network performance data is visually identifiable with respect to a geographic location corresponding to the geographic data; wherein the geographic data comprises terrain data associated with the geographic location, the user interface using the terrain data in order to represent graphically a terrain in relation to the geographic location.

The user interface may be arranged to represent the terrain as a three-dimensional view. The user interface may comprise view manipulation functionality. The view manipulation functionality may be one or more of: a zoom function, a pan function, a tilt function, and/or a rotate function. The zoom function may enable a visual overview at a local level, a regional level, a national level and/or an international level.

The database may be further arranged to store, when in use, first criterion data associated with the network performance data, the network performance data being filterable by a first criterion using the first criterion data; and the user interface may be further arranged to represent the filtered network performance data together with the geographic data so that the filtered network performance data is visually identifiable with respect to the terrain in relation to the geographic location.

According to a second aspect of the present invention, there is provided a performance analysis apparatus for a communications network, the apparatus comprising: a database arranged to store, when in use, network performance data, geographic data, and first criterion data associated with the network performance data, the network performance data being associated with the geographic data and filterable by a criterion using the first criterion data; and a user interface arranged to represent graphically, when in use, the filtered network performance data together with the geographic data so that the filtered network performance data is visually identifiable with respect to a geographic location corresponding to the geographic data.

The database may be further arranged to store, when in use, second criterion data associated with the network performance data, the network performance data being further filterable by a second criterion using the second criterion data; and the user interface may be further arranged to represent graphically, when in use, the further filtered network performance data together with the geographic data so that the further filtered network performance data is visually identifiable with respect to the geographic location.

The database may be a multi-dimensional database. The database may be an On-Line Analytical Processing database.

The network performance data may be measurement data. The network performance data may be near real-time network performance data. The network performance data may constitute a plurality of measurements grouped within a predetermined area. At least part of the measurement data may be provided by an agent entity resident on a communications terminal in the communications network.

The network performance data may be represented by an element of a grid or a vector area of an arrangement of non-overlapping vector areas.

The first criterion may be any one of: time, customer type, handset attribute, network parameter, subscription attribute, or measurement identifier. The second criterion may be any one of: time, customer type, handset attribute, network parameter, subscription attribute, or measurement identifier not used in relation to the first criterion.

The time criterion may be any one of: year, month, day-of-month, week-of-year, day-of-week, or time-of-day.

The customer type criterion may be any one of: market segment, such as pre-pay, post-pay, corporate department, or individual.

The handset attribute criterion may be any one of: manufacturer, operating system, operating system version, hardware revision, software revision, or form factor.

The network parameter criterion may be any one of: access technology, such as 2G, 2.5G, wi-fi; roaming status; country identifier; network identifier; location area identifier; network cell identifier; or network connection state.

The subscription attribute criterion may be a subscription provider identifier or a subscription identifier.

The measurement identifier criterion may be any one of: e-mail send time, SMS send time, HTTP performance, voice service availability, data service availability, emergency service availability, data transmit rate, data receive rate, handset application usage, battery charge level, amount of free memory, radio signal strength.

The network performance data may vary with time. The network performance data may vary in space with time.

According to a third aspect of the present invention, there is provided a method of analysing performance for a communications network, the method comprising: storing network performance data and geographic data, the network performance data being associated with the geographic data; and representing graphically the network performance data together with geographic data so that the network performance data is visually identifiable with respect to a geographic location corresponding to the geographic data; wherein the geographic data comprises terrain data associated with the geographic location, the terrain data being used in order to represent graphically a terrain in relation to the geographic location.

According to a fourth aspect of the present invention, there is provided a method of analysing performance for a communications network, the method comprising: storing network performance data, geographic data, and first criterion data associated with the network performance data, the network performance data being associated with the geographic data and filterable by a criterion using the first criterion data; and representing graphically the filtered network performance data together with the geographic data so that the filtered network performance data is visually identifiable with respect to a geographic location corresponding to the geographic data.

According to a fifth aspect of the present invention, there is provided a computer program code element comprising computer program code means to make a computer execute the method as set forth above in relation to the third or fourth aspect of the invention.

The computer program code element may be embodied on a computer readable medium.

It is thus possible to provide a performance analysis apparatus and a method of analysing performance that are capable of enabling identification of one or more factors associated with poor performance at a given geographic location. Further, it is also possible to view terrain at the given geographic location of poor performance, thereby enabling identification of any physical features at the given geographic location, for example a body of water or a natural or man-made obstacle, that can be responsible for the poor performance. Consequently, a more accurate diagnosis of a cause of the poor network performance than hitherto possible can be achieved.

### Brief Description of Drawings

At least one embodiment of the invention will now be described, by way of example only, with reference to the accompanying drawings, in which:
Figure 1 is a schematic diagram of a communications network in which a performance analysis apparatus, constituting an embodiment of the invention, is used;
Figure 2 is a schematic diagram of a communications device used by the system of Figure 1;
Figure 3 is a schematic diagram of the performance analysis apparatus of Figure 1;
Figure 4 is a schematic representation of an image displayed by a user interface of the performance analysis apparatus of Figure 1;
Figure 5 is schematic representation of another image displayed by the user interface of the performance analysis apparatus of Figure 1; and
**Figure 6** is a flow diagram of a method of analysing network performance employed by the performance analysis apparatus of Figure 1.

### Detailed Description

Throughout the following description identical reference numerals will be used to identify like parts.

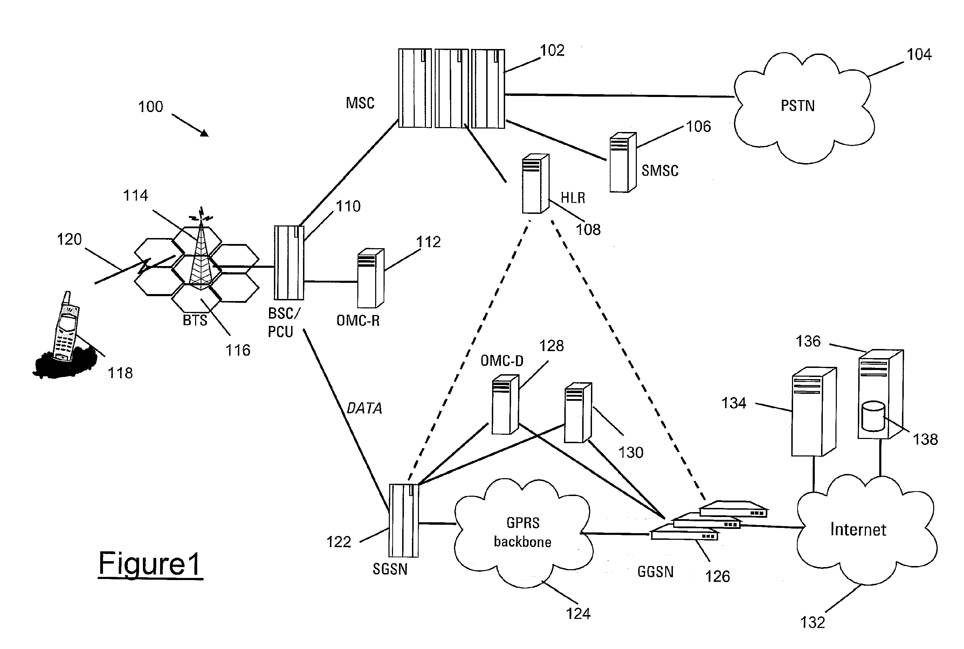

Referring to Figure 1, a monitoring system is implemented in a wireless communications network 100, the communications network 100 being, in this example, a Global Systems for Mobile Communications (GSM) network. The communication network 100 is capable of providing or facilitating voice communication and/or data transactions, services, or communications. The skilled person will, of course, appreciate that other communications networks can be used in place of or overlay the GSM communications network described herein, for example other telecommunication networks such as a Universal Mobile Telecommunications System (UMTS) network, wireless networks, wireline telephone networks and data communication networks.

For the sake of conciseness of description and hence ease of understanding, the GSM communications network is not described in detail, but the skilled person will recognise that the GSM communications network comprises other functional and structural aspects not described herein.

Referring again to Figure 1, the communications network 100 comprises a Mobile Switching Centre (MSC) 102 coupled to a Public Switched Telephone Network (PSTN) 104, a Short Messaging Service Centre (SMSC) node 106, a Home Location Register (HLR) 108 and a Base Station Controller (BSC) 110 that also has functionality so as to serve as a Packet Control Unit (PCU) to support the GPRS. The BSC 110 is coupled to an Operations and Maintenance Centre-Radio (OMC-R) 112 and a base station 114, the base station 114 supporting a number of cells 116 in one of which a communications apparatus, for example a communications terminal, such as a cellular communications handset 118, is located for communication with the communications network 100. The communications handset 118 is capable of communicating with the base station 114 via a Radio-Frequency (RF) interface 120. The communications handset 118 can be any device having a user interface capability associated with it, a network connectivity capability and an ability to accept software applications such as an agent entity, for example a software probe application, as described later herein. Examples of other communications apparatus include, but are not limited to, wireless communication devices, telematics devices or modules, Personal Computers (PCs), consumer appliances such as set-top boxes, and/or Personal Digital Assistants (PDAs).

In addition to being coupled to the base station 114, the BSC 110 is also coupled to a Serving GPRS Support Node (SGSN) 122, the HLR 108 being capable of communicating with the SGSN 122. The SGSN 122 is also coupled to a GPRS backbone network 124, the GPRS backbone network 124 being coupled to a Gateway GPRS Support Node (GGSN) 126. Both the SGSN 122 and the GGSN 126 are also coupled to an Operations and Maintenance Centre-Data (OMC-D) 128 and a charging gateway 130. The HLR 108 is also capable of communicating with the GGSN 126.

The GGSN 126 is coupled to, in this example, a data communications network, for example the Internet 132, a measurement server 134 also being coupled to the Internet 132. The measurement server 134 is, in this example, able to send measurement data to a network performance analysis server 136 that is also coupled to the Internet 132 and capable of communicating with the measurement server 134 via the Internet 132. The performance analysis server 136 comprises a persistent store, for example a database 138, though the persistent store can be remotely located from the measurement server 134. The database 138 is a multi-dimensional database, for example an On-Line Analytical Processing database capable of, inter alia, filtering data contained therein using one or more of a number of criteria. The database 138 is also capable of returning results of a query in a sufficiently short amount of time to allow interaction between an application and a user thereof, thereby avoiding appreciable delay to the user of the application when using the application to attempt to isolate criteria associated with, for example a level of network performance, when employing a trial-and-error analysis methodology.

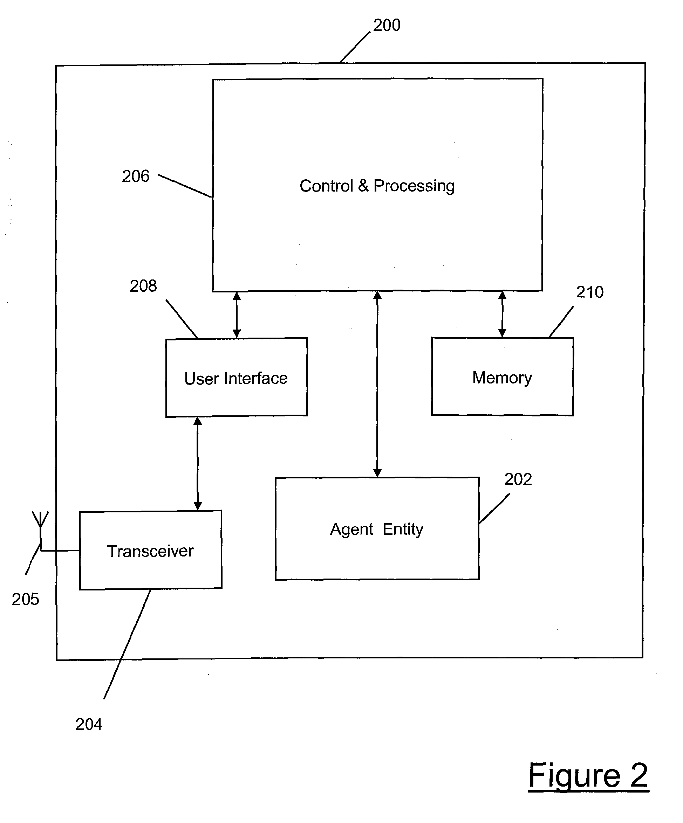

Turning to Figure 2, the communications handset 118 comprises a first processing resource 200, such as a chipset, capable of supporting the agent entity 202, when present on the communications handset 118, and thus functioning as a probe. The communications handset 118, of course, is also operable to function in the communications network 100.

The agent entity 202 is of the type described in US patent publication number US 2003/0134631 A1. The skilled person will, of course, realise that some of the functionality of US 2003/0134631 does not have to be employed and is application specific. The agent entity 202 is able to monitor, measure and capture transactions occurring in the communications network 100, as seen from the perspective of a user of the communications handset 118, and then provide this measurement data to the monitoring server 134 via a communications link using the RF interface 120. The communications link can be any means suitable for communicating between the communications handset 118 and the measurement server 134 via the communications network 100 and thus include, by way of example and not limitation, wireless, Internet and/or virtual private network (VPN) tunnelling. For example, the communications link can be an Internet link to a public or private network server or it can be a private network medium to a private network, as in the case of a virtual private network (VPN) tunnel to a server residing at a corporate intranet site or it can be an HTTP connection via the Internet to the measurement server 134. The measurement values of the measurement data can be in CSV (Comma Separated Values) format passed in an HTTP POST parameter list. The user interaction data can optionally be encrypted; encryption can be necessary in environments in which user and data privacy is a concern.

The measurement data can be network engineering metric data and/or user profile data and can be used to analyse and/or optimise functionality and quality of the communications network 100 as seen by the user of the communications handset 118. Operation and quality of the communications network 100 is managed by a network operator (not shown).

In this example, the first processing resource 200 also supports: a transceiver element 204 coupled to an antenna 205 and having both receiver and transmitter functionality for facilitating communications between the communications handset 118 and the communications network 100; a controller and processing capability, such as embedded JAVA processing, which together can be referred to as a control and processing element 206; a user interface element 208, such as a keypad, a microphone, a loudspeaker and/or a display screen, to allow the user to both send and receive communications and transactions in the communications network 100 via the communications handset 118. In this respect, communications engaged in by the user of the communications handset 118 can be manifested as voice and/or data transactions between the user and the communications network 100 via the user interface 208.

The first processing resource 200 further comprises a memory element 210, such as a buffer, for storing, at least temporarily, transaction data that is monitored, measured and captured by the communication device prior to it being transmitted to the measurement server 134. The user interface element 208 can have an ability to monitor key presses made by the user, recognise voice activity of the user, and an ability to create a data file of the actual user experience on the communications handset 118.

The agent entity 202 is dynamically and remotely configurable so as to define how the agent entity 202 monitors, measures and/or captures at least some portion of the characteristics of the transactions in which the user engages, from the perspective of the user, as the measurement data. The functionality of the agent entity 202 is performed in accordance with a functional definition of the agent entity 202 that can be, for example, dynamically and remotely configured, added to, changed, deleted and/or upgraded at will via the communications link by the network operator or other party interested in controlling operation of the agent entity 202. The measurement data collected by the agent entity 202, as mentioned above, can be temporarily stored in the memory 210, the control and processing element 206 providing control of other elements in the communications handset 118 and processing capability required by the agent entity 202.

The agent entity 202 can be considered a third party (3P) application capable of residing and operating within the communications handset 118. The software of the agent entity 202 can be implemented in any desired format, for example an open-development environment that facilitates the development of portable 3P applications. Examples of acceptable application and/or programming platforms and environments suitable for implementation of the probe element include, but are not limited to, the following: Sun JAVA (J2ME), C, C++, Qualcomm Binary Runtime Environment for Wireless (BREW) application environment, Microsoft Windows Mobile, Symbian operating system, or proprietary third party operating systems, environments, and/or programming languages. The agent entity 202, which can include diagnostic criterion for performing network diagnostics, can be downloaded from the network operator to the communications handset 118 via the communications link, such as over the Internet 132. The agent entity 202 can have an identification element, such as a control or serial number, which can be used to associate a particular instantiation of the agent entity 202 with a particular network subscriber or communications device. Of course, if desired, the agent entity 202 can be provided in a pre-configured form in the communications handset 118 as, for example, a logic circuit.

In this example, the communications handset 118 is equipped with a Global Positioning Satellite (GPS) data receiver (not shown), GPS location data generated by the GPS receiver being accessible by the agent entity 202.

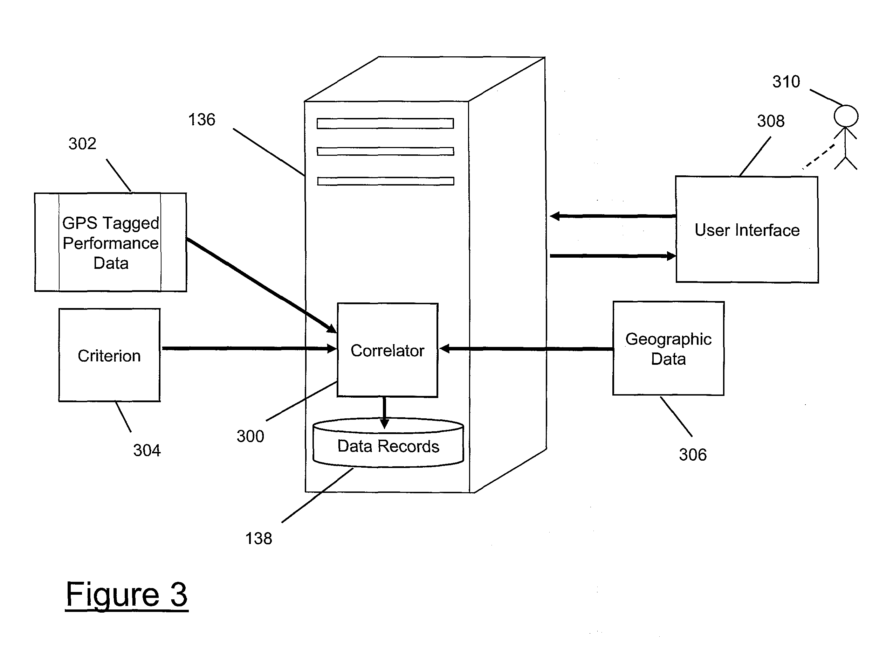

Referring to Figure 3, the performance analysis server 136 comprises a second processing resource that supports a performance analysis application comprising a correlation module 300. The correlation module 300 is capable of receiving, in this example, GPS location data-tagged measurement data 302, one or more criteria 304, and geographic data 306. Additionally, the second processing resource supports a user interface 308 of the performance analysis application used by an engineer 310.

The correlation module 300 is capable of accessing the database 138. The correlation module 300 associates the criteria 304 and the geographic data with the GPS location data-tagged measurement data and stores the association in the database 138. Hence, it is possible to ascertain, inter alia, coordinates and network performance at the coordinates. The criteria 304 include, without limitation: time, such year, month, day-of-month, week-of-year, day-of-week, and/or time-of-day; customer type, such as market segment, such as pre-pay, post-pay, corporate department, or individual; handset attribute, such as manufacturer, operating system, operating system version, hardware revision, software revision, and/or form factor; network parameters, such as access technology (such as 2G, 2.5G, wi-fi), roaming status, country identifier, network identifier, location area identifier, network cell identifier, or network connection state; subscription attribute, such as a subscription provider identifier or a subscription identifier; or measurement identifier, such as e-mail send time, SMS send time, HTTP performance, voice service availability, data service availability, emergency service availability, data transmit rate, data receive rate, handset application usage, battery charge level, amount of free memory, radio signal strength.

The geographic data 306 includes, in this example, cartographic information, for example maps and satellite images, for example three- and/or two-dimensional maps and/or images that include information concerning terrain. A number of sources of this information are readily available to the skilled person and so will not be described in further detail herein. However, although satellite images are employed in this example, the skilled person will understand that the three-dimensional images can be computer generated using other terrain data, for example a description of three-dimensional objects in a defined language or data structure and optionally rendered.

Operation of the performance analysis server 136 will now be described in the context of measurement and location data acquired using the agent entity 202. The skilled person will appreciate, nevertheless, that a number of communications handsets supporting a respective number of agent entities need to be employed in order to generate an adequate quantity of data. However, for the sake of conciseness and simplicity of description, the foregoing description of the operation of the performance analysis server 136 will be set out in relation to the single agent entity 202.

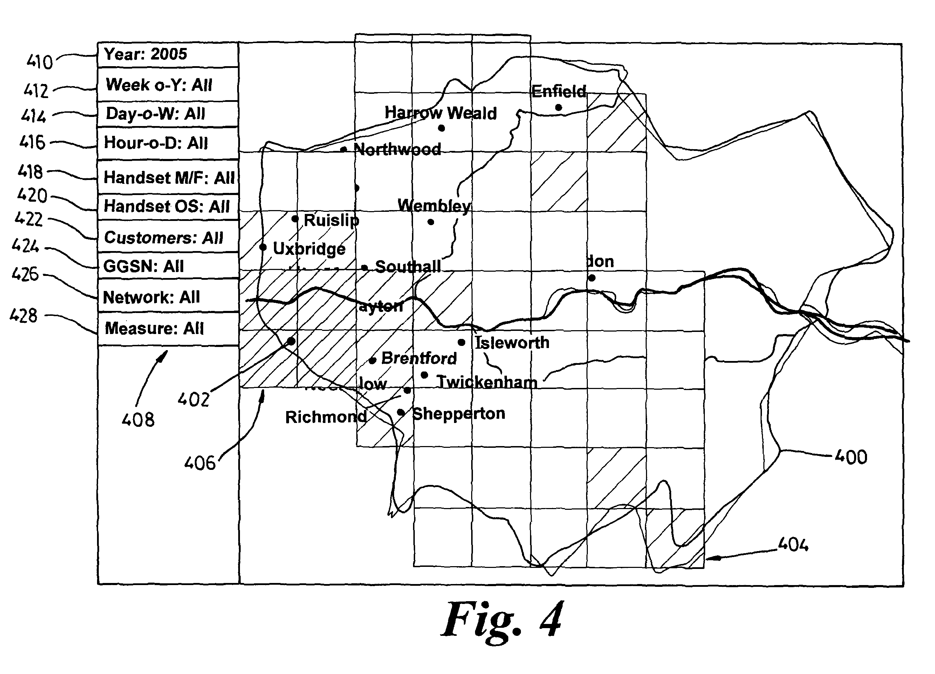

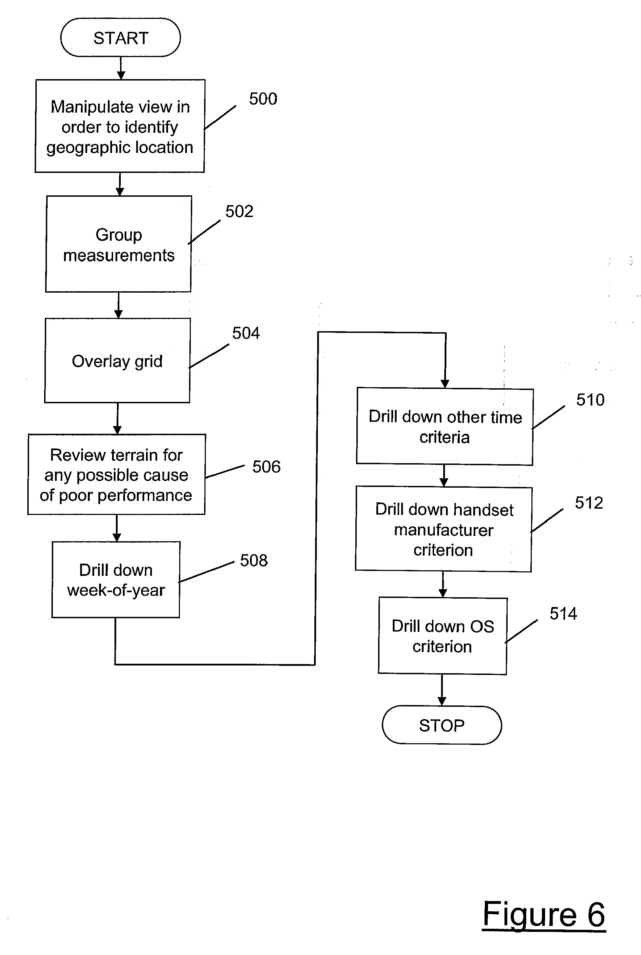

In operation (Figures 4 to 6), the agent entity 202 generates measurement data and sends the measurement data along with the GPS location data to the measurement server 134 via the communications link mentioned above. The measurement server 134, upon receipt of the raw GPS located data and the measurement data processes the GPS location data and the measurement data to generate refined GPS location data-tagged measurement data 302 that is transmitted to the performance analysis server 136. The performance analysis server 136 receives the GPS location data-tagged measurement data 302 and stores the GPS location data-tagged measurement data 302 in the database 138 for subsequent use.

Whilst the above example has been described in the context of the communications handset 118 having the GPS data receiver, the skilled person will appreciate that location data can be obtained from an alternative source, for example triangulation, instead of through use of the GPS data receiver. Indeed, the measurement data or the GPS location (or other) data does not have to be data acquired in near real-time, but can be historic data acquired, not necessarily using the agent entity 202 but by another network intelligence technique and supplied in advance of an analysis session and stored in the database 138.

Once the database 138 is populated with a sufficient quantity of data to provide meaningful results, the user interface 308 is used in the analysis session by the engineer 310 to perform analysis on the measurement data contained in the database 138 in order to identify poor performance in the communications network 100.

In this example, a user of another communications handset (not shown) in the vicinity of Heathrow airport in London, UK, has experienced poor performance in relation to voice call quality. Further, the user has complained to the operator of the communications network 100 and the engineer 310 is charged with investigating the origin of the poor performance experienced by the user by performing the performance analysis on the measurement data stored in the database 138.

Consequently, upon executing the network performance application, the user interface 308 presents to the engineer 310 a three-dimensional graphical representation of an overview of the geographic information also stored in the database 138. The user interface 308 also presents view manipulation controls (not shown) in order to enable the engineer 310 to zoom, pan, tilt and/or rotate the view presented graphically. The overview presented initially is that of the world, since in this example, the measurement data pertaining to a number of communications networks around the world is stored in the database 138.

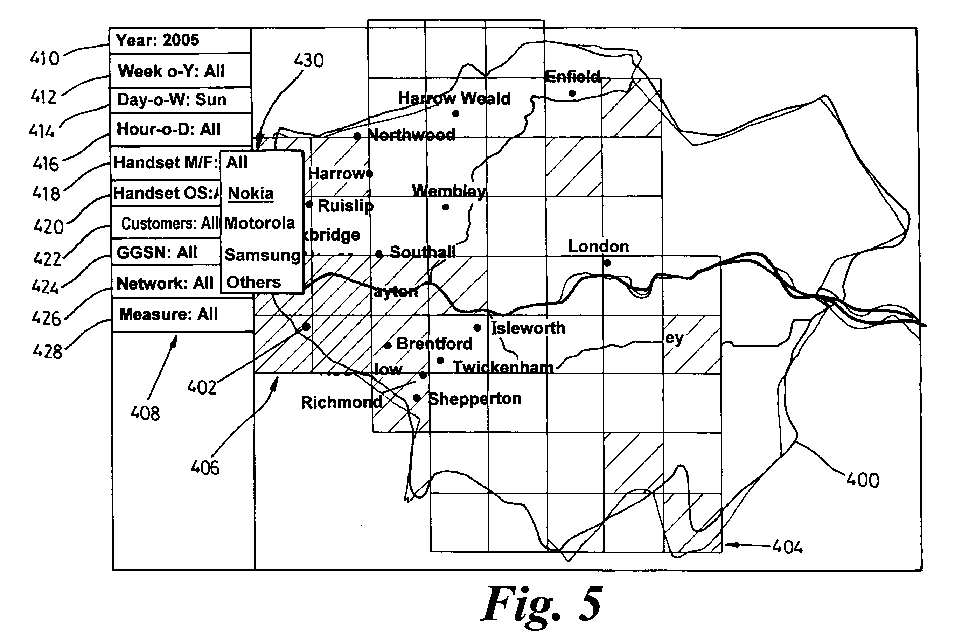

In order to identify measurement data relevant to the poor performance reported to the network operator, namely in relation to Heathrow airport, the engineer 310 rotates (Step 500) the representation of the world, i.e. a globe, presented using the rotate function in order to find the UK on the globe. The engineer 310 then activates the zoom function (Step 500) in order to obtain a more detailed view of the UK than previously presented by the user interface 308. Once the engineer has a national view as opposed to a worldwide view, the engineer 310 employs the rotate and zoom functions further (Step 500) in order to obtain a more detailed view of England, i.e. a country view, and then subsequently a regional view, i.e. of London. Thereafter, the engineer 310 yet further manipulates the three-dimensional view again (Step 500) in order to obtain a local view of Greater London 400 (Figure 4) that includes, in particular, Heathrow airport 402. Although, in this example, the views presented to the engineer 310 are three-dimensional views, for the sake of clarity of explanation this example will be described in relation to two-dimensional views in Figures 4 and 5. The skilled person will also appreciate that although the geographic data can be displayed in three dimensions, two-dimensional views can be used in place of all or some of the three dimensional views described herein. Further, a search facility can be provided in order to enable the engineer to obtain more direct access to a specific geographic location, for example Heathrow airport 402, without the need to manipulate the worldwide geographic image presented by the user interface 308.

The performance analysis application uses the geographic and terrain information to present the three dimensional view (two-dimensional view in Figures 4 and 5) of Heathrow airport 402 and surrounding area. The GPS location data-tagged measurement data 302 is processed (Step 502) by the performance analysis application in order to group, or aggregate, the GPS location data-tagged measurement data 302 by area on a grid 404 that is overlaid (Step 504) by the performance analysis application on the geographic information (including terrain information) represented graphically by the user interface 308. For the ease of reference of the engineer 310, the grid areas are colour-coded according to levels of performance thresholds, the thresholds being predetermined by the network operator and stored in an editable configuration file (not shown). The grid areas are therefore shown, in this example, as shaded areas.

Whilst, in this example, the grid 404 is employed, the skilled person will appreciate, that other shape configurations, regular or irregular in nature, can be used to summarise visually performance over different geographic area, for example non-overlapping vector areas, such as a tessellation of triangles.

By virtue of the use of the three-dimensional views, the engineer 310 is presented with terrain information that can be of particular use in diagnosing the cause of a network performance problem. For example, the terrain information can communicate to the engineer 310 (Step 506) the presence of a physical natural or man-made object, for example a body of water, which can be responsible for network performance problems experienced, for example Radio Frequency (RF) propagation problems.

Turning back to Heathrow airport 402, although not shown in colour in Figure 4, a block of four grid areas 406 are shown shaded in red over the area surrounding Heathrow airport 402. In this respect, the user interface 308 has identified to the engineer 310 that in the year 2005, poor network performance has manifested itself in the area surrounding Heathrow airport 402.

However, simply knowing that poor network performance was experienced in the area surrounding Heathrow airport 402 does not comprise a specificity necessary to diagnose the potential cause of the poor performance reported by the user previously, and the terrain information may not reveal a potential cause of the poor performance.

Consequently, the network performance data stored in the database 138 has to be filtered in order to isolate one or more factor associated with the poor network performance. In order to achieve the filtering necessary, the user interface 308 presents the engineer 310 with a number of criteria provided as a number of drop-down menu items 408. In the present example, the engineer 310 is able to filter by year 410 (set to a default value of 2005 in this example), week-of-year 412, day-of-week 414, time-of-day 416, handset manufacturer 418, handset operating system 420, customer type 422, GGSN 424, network 426 and measurement data type or identifier 428.

The engineer 310 therefore drills down (Step 508) through the menu items 408 representing the criteria, for example, by selecting a week of the year corresponding to the report of poor network performance by the user using the week-of-year menu item 412. As changes are made to the criteria selected, the database 138 filters the network performance data represented graphically in the grid 404. Hence, by watching the changes or absence of changes to the colour of the block of four grid areas 406, in particular, corresponding to the area surrounding Heathrow airport 402, the engineer 310 is able to isolate when, in time, the poor network performance reported occurred, further refinement in time being possible (Step 510) using the day-of-week 414 and time-of-day 416 menu items. The process of identifying the criteria associated with the poor network performance reported is trial-and-error in nature when performed manually, but the skilled person will also appreciate that this process can be automated using data mining techniques. Hence, the engineer 310 can attempt to make other filter selections using the menu items 408, for example by selecting a handset manufacturer 430 (Step 512), for example: Nokia, Motorola, Samsung or LG using the handset manufacturer 418 menu item, and an operating system type (Step 514), for example Symbian, as it may be a specific combination of handset manufacturer and operating system type that is associated with the poor network performance reported. The engineer 310 is therefore provided with a basis for the performance of further investigations, for example to determine if a particular release of an operating system is associated with the poor network performance. In the above process, the engineer 310 uses the colour-coded shaded grid areas to guide the engineer 310 in the selections and de-selections of the criteria using the drop down menus 408.

Hence, the engineer 310 is able to isolate criteria associated with the poor performance reported in order to assist in rectification of any technical problems that require resolution.

The above-described embodiment relates to a single type of measurement to determine performance of the communications network 100. However, the skilled person will appreciate that other measurement data can be collected and stored in the database 138. In this respect, the measurement type 428 menu item can be used to select a particular measurement data type, such as received signal strength, or can be used to identify areas of poor network performance using a calculation based on a subset of all performance data available or using a calculation based on all performance data available.

Whilst manufacturers and operating systems have been specified above, it should be understood that these are provided as examples only to assist in the understanding of the above embodiment and should not be construed as implying any shortcomings or faults associated with a particular manufacturer or operating system.

Alternative embodiments of the invention can be implemented as a computer program product for use with a computer system, the computer program product being, for example, a series of computer instructions stored on a tangible data recording medium, such as a diskette, CD-ROM, ROM, or fixed disk, or embodied in a computer data signal, the signal being transmitted over a tangible medium or a wireless medium, for example, microwave or infrared. The series of computer instructions can constitute all or part of the functionality described above, and can also be stored in any memory device, volatile or non-volatile, such as semiconductor, magnetic, optical or other memory device.

## Claims

1. A performance analysis apparatus for a communications network (100), the apparatus comprising:
a database (138) arranged to store, when in use, network performance data (302) and geographic data (306), the network performance data (302) being associated with the geographic data (306); and
a user interface (308) arranged to represent graphically, when in use, the network performance data (404) together with the geographic data (400) so that the network performance data (404) is visually identifiable with respect to a geographic location (402) corresponding to the geographic data (306, 400); wherein
the geographic data (400) comprises terrain data associated with the geographic location (402), the user interface (308) using the terrain data in order to represent graphically a terrain in relation to the geographic location (402).

2. An apparatus as claimed in Claim 1, wherein the user interface (308) is arranged to represent the terrain as a three-dimensional view.

3. An apparatus as claimed in Claim 1 or Claim 2, wherein the user interface comprises view manipulation functionality.

4. An apparatus as claimed in any one of the preceding claims, wherein:
the database (138) is further arranged to store, when in use, first criterion data (304) associated with the network performance data (302), the network performance data being filterable by a first criterion (410...428) using the first criterion data; and
the user interface (308) is further arranged to represent the filtered network performance data together with the geographic data so that the filtered network performance data is visually identifiable with respect to the terrain in relation to the geographic location.

5. A performance analysis apparatus for a communications network, the apparatus comprising:
a database (138) arranged to store, when in use, network performance data (302), geographic data (306), and first criterion data (304) associated with the network performance data, the network performance data (302) being associated with the geographic data (306) and filterable by a criterion (410...428) using the first criterion data; and
a user interface (308) arranged to represent graphically, when in use, the filtered network performance data together with the geographic data (306) so that the filtered network performance data is visually identifiable with respect to a geographic location corresponding to the geographic data.

6. An apparatus as claimed in Claim 4 or Claim 5, wherein:
the database (138) is further arranged to store, when in use, second criterion data (304) associated with the network performance data (302), the network performance data being further filterable by a second criterion (410...428) using the second criterion data; and
the user interface (308) is further arranged to represent graphically, when in use, the further filtered network performance data together with the geographic data so that the further filtered network performance data is visually identifiable with respect to the geographic location.

7. An apparatus as claimed in any one of the preceding claims, wherein the database (138) is a multi-dimensional database.

8. An apparatus as claimed in any one of the preceding claims, wherein the database (138) is an On-Line Analytical Processing database.

9. An apparatus as claimed in Claim 4, Claim 5 or Claim 6, wherein the first criterion (410...428) is any one of: time, customer type, handset property, network parameter or measurement identifier.

10. An apparatus as claimed in Claim 9, wherein the second criterion (410...428) is any one of: time, customer type, handset property, network parameter or measurement identifier not used in relation to the first criterion.

11. An apparatus as claimed in any one of the preceding claims, wherein the network performance data varies with time.

12. An apparatus as claimed in any one of the preceding claims, wherein the network performance data (302) is derived from measurement data provided by an agent entity (202) residing on a communications terminal (118) in the communications network (100).

13. A method of analysing performance for a communications network, the method comprising:
storing network performance data (302) and geographic data (306), the network performance data (302) being associated with the geographic data (306); and
representing graphically (504) the network performance data (302) together with geographic data (306) so that the network performance data is visually identifiable with respect to a geographic location (402) corresponding to the geographic data; wherein
the geographic data (306) comprises terrain data associated with the geographic location (402), the terrain data being used in order to represent graphically a terrain in relation to the geographic location (402).

14. A method of analysing performance for a communications network, the method comprising:
storing network performance data (302), geographic data (306), and first criterion data (304) associated with the network performance data (302), the network performance data (302) being associated with the geographic data (306) and filterable by a criterion (410...428) using the first criterion data (304); and
representing graphically the filtered network performance data together with the geographic data (306) so that the filtered network performance data is visually identifiable with respect to a geographic location (402) corresponding to the geographic data.

15. A computer program code element comprising computer program code means to make a computer execute the method as claimed in Claim 13 and Claim 14.

16. A computer program code element as claimed in Claim 15, embodied on a computer readable medium.
